(19) Europäisches Patentamt
European Patent Office
Office européen des brevets

(11) **EP 1 966 256 B1**

(12) **EUROPEAN PATENT SPECIFICATION**

(45) Date of publication and mention
of the grant of the patent:
**22.06.2011 Bulletin 2011/25**

(21) Application number: **06829955.1**

(22) Date of filing: **08.11.2006**

(51) Int Cl.:
*C08F 10/06* (2006.01)     *C08L 23/10* (2006.01)

(86) International application number:
**PCT/EP2006/068225**

(87) International publication number:
**WO 2007/071496 (28.06.2007 Gazette 2007/26)**

(54) **SOFT NON-WOVEN FABRICS**

WEICHE VLIESSTOFFE

TISSUS NON TISSES DOUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.12.2005 EP 05112518**
**22.12.2005 US 753273 P**

(43) Date of publication of application:
**10.09.2008 Bulletin 2008/37**

(73) Proprietor: **Basell Poliolefine Italia S.r.l.**
**20124 Milano (IT)**

(72) Inventors:
• **SARTORI, Gabriella**
**I-44100 Ferrara (IT)**
• **SARTORI, Franco**
**I-44100 Ferrara (IT)**
• **LEMAIRE, Renaud**
**B-1090 Brussels (BE)**

(74) Representative: **Gaverini, Gaetano Luigi Attilio**
**Piazza le Donegani, 12**
**44100 Ferrara (IT)**

(56) References cited:
**EP-A2- 0 632 147     EP-B1- 0 663 965**
**WO-A-2004/029341     WO-A-2004/029342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to propylene polymer filaments and fibers that can be produced with superior spinnability and to soft non-woven fabrics obtained therefrom.

It is known in the art that propylene homopolymer have excellent spinnability, but since their melting point is relatively high, i.e. typically up to 165°C, they require high temperatures for producing non-woven fabrics by thermal processes, like thermal spunbonding. Moreover, fibers and non-woven fabrics obtained from propylene homopolymers have rather poor hand. The hand or feel of a fabric plays an important role since there is a growing demand on the market for "soft hand" non-woven fabrics. Propylene copolymers and propylene polymer compositions can be conveniently used to overcome the drawbacks of propylene homopolymers.

For example, the International Patent Application WO 2004/029342 discloses non-woven fabrics comprising crystalline propylene random copolymers or crystalline propylene polymer compositions, wherein said crystalline propylene copolymers or composition have good thermal bondability. The European Patent EP 663 965 discloses fibers comprising a blend of a propylene homopolymer with up to 20 wt% of an hcterophasic propylene polymer composition, said fibers having improved softness.

However, a need still exists for propylene polymers having good spinnability that can be easily spun into soft fibers or filaments. It is therefore an object of the present invention to provide propylene polymer compositions having good spinnability, which can be converted into "soft hand" fibers and non-woven fabrics while retaining a good balance of mechanical properties.

Therefore, the present invention provides a propylene polymer composition comprising (based on the sum of A+B):

(A) 55-95 wt%, more preferably 70-90 wt%, of a propylene copolymer or a propylene copolymer composition containing from 0.8 to 10 wt%, more preferably from 0.8 to 5 wt% (based on the propylene polymer (A)), of alpha-olefin units having from 2 to 10 carbon atoms other than propylene, said propylene copolymer or propylene copolymer composition having MFR(A) ranging from 10 to 60 g/l 10min, preferably from 15 to 35 g/10min; and

(B) 5-55 wt%, more preferably 10-30 wt%, of a propylene polymer composition comprising (based on the component (B)):

(a) 5-50 wt%, preferably 10-40 wt%, more preferably 20-35 wt%, of a propylene homopolymer having a xylene soluble fraction at 25°C lower than 20 wt%, preferably from 2 to 15 wt%, or of a copolymer of propylene with at least one alpha-olefin having from 2 to 10 carbon atoms other than propylene; said copolymer containing more than 85% of propylene units and having a xylene soluble fraction at 25°C lower than 20 wt%;

(b) 0-20 wt%, preferably 5-15 wt%, of a copolymer of ethylene with at least one apha-olefin having from 3 to 10 carbon atoms, said copolymer being at least partially insoluble in xylene at 25°C; and

(c) 40-95 wt%, preferably 50-75 wt%, of a copolymer of propylene with at least one alpha-olefin having from 2 to 10 carbon atoms than propylene, said copolymer containing from 20 to 38 wt% of alpha-olefin units, and being at least partially soluble in xylene at 25°C.

The propylene copolymer or the propylene polymer composition (A) has:

- melting temperature equal to or higher than 145°C;
- xylene soluble fraction at 25°C lower than 15 wt%, more preferable lower than 12 wt%; and
- Polydispersity Index (PI) value ranging from 3 to 6, more preferably from 2.5 to 4,5. According to a first embodiment, the propylene polymer composition (A) comprises:

(I) 20-80 wt%, more preferably 30-70 wt%, of a propylene homopolymer or propylene copolymer with at least one alpha-olefin having from 2 to 10 carbon atoms other than propylene, said copolymer containing up to 1.5 wt%, preferably from 0.01 to 0.5 wt%, of alpha-olefin units and

(II) 20-80 wt%, more preferably 30-70 wt%, of a propylene copolymer with at least one alpha-olefin having from 2 to 10 carbon atoms other than propylene, said copolymer containing up to 10 wt%, preferably from 0.8 to 10 wt%, more preferably from 0,8 to 5 wt%, of alpha-olefin units, provided that the total alpha-olefin content of the propylene polymer composition (A) is up to 10 wt%. When the alpha-olefin unit other than propylene is ethylene, the difference in the ethylene content between polymer (I) and polymer (II) is normally at least 0.8 percentage unit, preferably 1 percentage unit, more preferable 2 percentage units and when the alpha-olefin unit other than propylene is a $C_4$-$C_{10}$ alpha-olefin said difference is at least 1.5 percentage units, preferably 2 percentage units.

According to a further embodiment, the propylene polymer copolymer or propylene copolymer composition (A) is selected among:

(i) a propylene copolymer or propylene copolymer composition containing at least 0.8 wt% of units deriving from at least one alpha-olefin having from 2 to 10 carbon atoms other than propylene, said propylene copolymer or propylene copolymer composition having a melting temperature equal to or higher than 155°C, xylene-soluble fraction lower than 5 wt%, a value of the ratio of the polymer fraction collected at the temperature range from 25° to 95°C by temperature rising elution fractionation (TREF) with xylene to the xylene soluble fraction at room temperature higher than 8; and

(ii) a propylene copolymer or propylene copolymer composition containing more than 2.5 wt% of units deriving from at least one alpha-olefin having from 2 to 10 carbon atoms other than propylene, said propylene copolymer or propylene copolymer composition having a melting temperature equal to or higher than 153°C, xylene-soluble fraction lower than 10 wt%, preferably lower than 8 wt%, and a value of the ratio of the polymer fraction collected at the temperature range from 25° to 95° C by TREF with xylene to the xylene soluble fraction at room temperature higher than 4, preferably higher than 4.5.

For the preparation of propylene copolymers or propylene polymer compositions (A) propylene units are polymerized in the presence of at least one alpha-olefin having 2 to 10 carbon atoms other than propylene, the alpha-olefin units preferably deriving from ethylene, 1-butene, 1-pentene, 1-hexene, 1-heptene, 1-octene, 4-methyl-1-pentene, ethylene being particularly preferred.

According to a first embodiment, the propylene copolymer or the propylene polymer composition (A) can be directly prepared in at least one polymerization step in presence of highly stereospecific heterogeneous Ziegler-Natta catalyst systems. Alternatively, and more preferably, the propylene copolymer or the propylene polymer composition (A) can be prepared by subjecting to chemical degradation a precursor propylene copolymer or a precursor propylene copolymer or precursor propylene polymer composition (A1) having MFR(A1).

According to a preferred embodiment, the propylene copolymer or the propylene polymer composition (A) are obtainable by a process comprising the following steps:

(1) polymerizing suitable monomers in at least one polymerization step in presence of a highly stereospecific heterogeneous Ziegler-Natta catalyst system to obtain a precursor propylene copolymer or precursor propylene polymer composition (A1) having a MFR(A1) ranging from 0.4 to 10 g/10min, preferably from 0.9 to 5 g/10min; and
(2) subjecting said precursor propylene copolymer or precursor propylene polymer composition (A1) to chemical degradation to obtain a propylene polymer composition (A) having MFR(A) ranging from 10 to 60 g/10min, wherein the ratio MFR(A)/MFR(A1) ranges from 6 to 30.

The Ziegler-Natta catalysts suitable for producing the propylene copolymer or the propylene polymer composition (A) and the precursor propylene copolymer or precursor propylene polymer composition (A1) comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00/63261.

Preferably, the solid catalyst component comprises Mg, Ti, halogen and an electron donor selected from mono- and diesters of aromatic dicarboxylic acids having the -COOH groups into ortho position, wherein at least one of the R hydrocarbyl radical of the -COOR groups contains from 3 to 20 carbon atoms. Particularly preferably the electron donor is selected from diisobutyl-2,3-naphthalen-dicarboxylate, di-n-propyl, di-n-butyl, diisobutyl, di-n-heptyl, di-2-ethylhexyl, di-n-octyl, di-neopentil phthalates, monobutyl and monoisobutyl esters of phthalic acid, ethyl-isobutylphthalate, ethyl-n-butyl-phthalate as described in European patents EP45977 and EP728769.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 °C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the succinate of formula (I) is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44009. The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$. The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, esters such as ethyl 4-ethoxybenzoate, heterocyclic compounds and particularly 2,2,6,6-tetramethyl piperidine and ketones. Another class of preferred external donor compounds is that of silicon compound of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metildimethoxysilane. The external electron donor compound is used in such an amount to give a molar ratio between the organo-aluminum compound and said electron donor compound of from 0.1 to 500.

The polymerization can be carried out in liquid phase, in gas phase or in liquid-gas phase, in continuous or batch reactors, such as fluidized bed or slurry reactors. Preferably, said propylene copolymer or propylene polymer composition (A) or said precursor propylene copolymer or precursor propylene polymer composition (A1) can be prepared by a gas-phase polymerization process carried out in at least two interconnected polymerization zones. Said polymerization process is described in the European patent EP 782587 and in the International patent application WO00/02929. The process is carried out in a first and in a second interconnected polymerization zone to which propylene and at least one alpha-olefin are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C, preferably from 70°C to 90°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. In the polymerization process means are provided which are capable of totally or partially preventing the gas and/or liquid mixture present in the raiser from entering the downcomer and a gas and/or liquid mixture having a composition different from the gas mixture present in the raiser is introduced into the downcomer. According to a preferred embodiment, the introduction into the downcomer, through one or more introduction lines, of said gas and/or liquid mixture having a composition different from the gas mixture present in the raiser is effective in preventing the latter mixture from entering the downcomer. The gas and/or liquid mixture of different composition to be fed to the downcomer can optionally be fed in partially or totally liquefied form. The molecular weight distribution and thus the P.I. value of the growing polymers can be conveniently tailored by carrying out the polymerization process in an reactor diagrammatically represented in Figure 4 of the International Patent Application WO00/02929 and by independently metering the comonomer(s) and customary molecular weight regulators, particularly hydrogen, in different proportion into at least one polymerization zone, preferably into the raiser.

In the preferred process .for preparing the propylene polymer composition (A), the chemical degradation step (2) can be carried out by treating the precursor propylene copolymer or precursor propylene polymer composition (A1) with appropriate amounts, preferably from 0.001 to 0.20 wt%, more preferably from 0.04 to 0.10 wt%, of free radical initiators according to processes well-known in the art. Preferably, the chemical degradation is carried out by contacting under high shear conditions the polymeric material with at least one free radical initiator at a temperature equal to or higher that the decomposition temperature of the free radical initiator. Preferred free radical initiators are peroxides having a decomposition temperature ranging from 150° to 250°C, such as di-tert-butyl peroxide, dicumyl peroxide, the 2,5-dimethyl-2,5-di (tert-butylperoxy)hexyne, and 2,5-dimethyl-2,5-di(tert-butylperoxy)hexane (traded by Akzo under the name Luperox 101 or Trigonox 101).

In propylene polymer composition (B), the propylene polymers of fractions (B)(a) and B(c) are copolymers of propylene with at least one alpha-olefin having from 2 to 10 carbon atoms, wherein preferred alpha-olefins are selected among ethylene, 1-butene, 1-pentene, 1-hexene, 1-heptene, 1-octene, 4-methyl-1-pentene, ethylene being particularly preferred. The component (B)(b) is a copolymer of ethylene with at least one alpha-olefin having from 3 to 10 carbon atoms, wherein preferred alpha-olefins are selected among propylene and alpha-olefins mentioned above, propylene being particularly preferred. The fractions (B)(b) and (B)(c) may optionally contain a conjugated or non-conjugated diene, such as butadiene, 1,4-hexadiene, 1,5-hexadiene and ethylidene-norbornene-1. The diene, when present, is contained in an amount of from 0.5 to 10% by weight, with respect to the weight of (b)+(c).

The total ethylene units content of the propylene polymer composition (B) preferably ranges from 15 to 35 wt%.

The ethylene/$C_3$-$C_{10}$ alpha-olefin copolymer of fraction (B)(b) has a solubility in xylene at 25°C lower than 20 wt % and preferably it is insoluble in xylene at room temperature.

The propylene/$C_2$-$C_{10}$ alpha-olefin copolymer of fraction (B)(c) has solubility in xylene at 25°C higher than 50 wt%, more preferably it is completely soluble in xylene at 25°C, and it has an intrinsic viscosity ranging from 1.5 to 4.0 dl/g, more preferably from 1,7 to 3.0 dl/g.

The propylene polymer composition (B) can be prepared by sequential polymerization in at least two stages, with each subsequent polymerization stage (apart from the first stage) being conducted in the presence of the polymeric material formed in the immediately preceding polymerization reaction, wherein the polymer fraction (B)(a) is preferably prepared in at least one first stage, and the copolymer factions (B)(b) and (B)(c) are prepared in at least one second stage. The polymerization stages may be carried out in presence of a Ziegler-Natta and/or a metallocene catalyst. Preferably, all the polymerization stages are carried out in presence of a Ziegler-Natta catalyst comprising a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysis systems are described in the European patents EP45977, EP361494, EP728769, EP 1272533 and in the international patent application WO00/63261. Preferred internal and external donors, organo-aluminum compound and the solid catalyst component preparation are the same described in the foregoing.

The polymerization can be carried out in liquid phase, in gas phase or in liquid-gas phase, in continuous or batch reactors, such as fluidized bed or slurry reactors. For example, it is possible to carry out the polymerization of the propylene polymer fraction (B)(a) in liquid phase, using liquid propylene as diluent, while the copolymerization stages to obtain the copolymer fractions (B)(b) and (B)(c) arc carried out in gas phase, without intermediate stages except for the partial degassing of the monomers. Alternatively, all the sequential polymerization stages can be carried out in gas phase. The polymerization temperature for the preparation of fractions can be the same or different and is usually from 40°C to 90°C. The polymerization pressure preferably ranges from 5 to 30 bar if the polymerization is done in gas phase. Examples of propylene polymer compositions (B) arc described in the European Patent EP472946, in the International patent application WO 03/011962 and WO 00/02929.

The Melt Flow Rate MFR(B) of the propylene polymer composition (B) preferably ranges from 10 to 60 g/10min, particularly preferably from 15 to 35 g/10min. Said propylene polymer compositions (B) can be obtained directly from the polymerization reaction as described in the foregoing or, alternatively, by subjecting to chemical degradation, in particular peroxidic degradation, a precursor propylene polymer composition (B1) having Melt Flow Rate MFR(B1) lower than the MFR(B). The chemical degradation of the precursor propylene polymer composition (B1) can be carried out according to methods known in the art as described in the foregoing.

The propylene polymer composition of the present invention may further comprise additives commonly employed in the polyolefin field, such as antioxidants, light stabilizers, nucleating agents, antiacids, colorants, fillers and processing improvers, said additives being normally added to the propylene copolymer or propylene copolymer composition (A) and/or to the propylene polymer composition (B) according to methods well known in the art.

The propylene polymer compositions of the invention can be prepared according to known methods, such as by dry-blending or by melt-blending under high shear conditions the components (A) and (B). Preferably, a blend of the components (A) and (B), and optionally the additives, is prepared in a conventional mixer (ex. a tumble-mixer) to obtain a dry blend. Alternatively, the component may be metered simultaneously or separately directly to a single- or twin-screw extruder, into the same or different sections of the equipment. The extruding temperature generally ranges from 170 to 250°C.

Fibers or filaments comprising the propylene polymer compositions of the invention may be prepared using processes and apparatuses well known in the art, i.e. by melt-spinning the propylene polymer composition in conventional devices suitable for producing single or composite fibers or filaments. According to a further embodiment, the composite fibers or filaments may have a "sheath-core structure". By "fibers or filaments having a sheath-core structure" is meant herein fibers or filaments having an axially extending interface and comprising at least two components, i.e. at least an inner core and at least an outer sheath, said at least two components comprising different polymeric materials and being joined along the axially extending interface. In sheath-core fibers or filaments the sheath thickness may be uniform or the sheath thickness may not be uniform around the circumference of a fiber or filament cross-section. Said fibers or filaments having sheath-core structure can be produced using conventional melt-spin equipments having concentric annular dies. The propylene polymer compositions of the invention may be conveniently used to for the outer sheath of fibers or filaments having a sheath-core structure. The inner core may comprise any polymeric material commonly used for spunbonding applications, depending on the desired end properties of the composite fibers or filaments. Preferably, the sheath-core fibers or filaments comprise 50-90 wt%, more preferably 65-80 wt%, of polymeric material forming the core-layer and 10-50 wt%, more preferably 20-35 wt%, of the propylene polymer compositions of the invention forming the outer sheath-layer. Particularly advantageous are sheath-core fibers or filaments comprising 70 wt% of polymeric-material forming the core layer and 30 wt% of the propylene polymer compositions of the invention forming the outer sheath.

The propylene polymer composition of the invention shows an extremely good spinnability, i.e. they can be spun into fibers or filaments at high spinning speeds without breaking, and resulting at the same time in fibers or filaments endowed with improved softness which retain good mechanical properties, i.e. high tenacity and high elongation at break. By spinning speed is meant therein the take-up rate of the spinning machine. Preferably, the fibers or filaments of the invention show one or more properties of the following set:

- Softness Index equal to or higher than 1000 l/g, more preferably ranging from 1000 to 1200l/g;
- Elongation at break ranging from 150 to 200%;
- Tenacity higher than 20 cN/tex, more preferably higher than 23 cN/tex; and
- Titre ranging from 0.8 and 8 dtex, more preferably from 1.0 to 4.0 dtex.

The Softness Index is a conventional measure to evaluate the fibers' flexibility.

Fibers or filaments having improved tenacity/softness balance in combination with excellent spinnability can be conveniently prepared using the propylene polymer compositions of the invention, said fibers or filaments having sheath-core structure, wherein the skin layer comprises the propylene polymer composition of the invention and core layer comprises a propylene homopolymer having low xylene-soluble fraction at 25°C, preferably lower than 5.0 wt%, more preferably lower than 3 wt%, and high flexural modulus, preferably higher than 1100 MPa, more preferably higher than 1300 MPa. Said propylene homopolymers are commercially available. Preferably, the skin layer of fibers or filaments of the invention having sheath-core structure represent a proportion ranging from 20 to 40 wt% with respect to the whole weight of the filament.

The fibers or filaments of the invention can be converted into fabrics. According to a preferred embodiment of the invention, the fibers can be converted into non-woven fabrics, in particular into spunbonded non-woven fabrics.

The spunbond process combines the fiber spinning and the web formation into a single production process. Fibers are formed as the molten polymer exits the spinnerets, normally quenched by cool air and the filaments are pulled away from the spinneret by high pressure air. Then the filaments are deposited onto a moving belt forming a non-woven fabric. The fabric weight is determined by the throughput per spinneret hole, the number of holes and the speed of the moving belt. Subsequently, the fabric can be bonded by different methods, such as thermal bonding, chemical bonding or needle punching, thermal bonding being preferred. By thermal bonding the fabric is passed between calender rolls heated at a temperature normally comprised in the range from 110° to 150°C, preferably from 120° to 130°C.

The propylene polymer composition of the invention results in spunbonded non-woven fabrics which have superior softness and good mechanical properties. The softness of a non-woven fabric is related to the fabric's stiffness and can be expressed through the Bending Softness Index (B.S.I.). The B.S.I. (measured according to the method described hereinafter) depends on the bending length of the material, which is a measure of its draping quality (drapability). The softer the material, the lower is the bending length. The non-woven fabrics of the invention have a B.S.I. value equal to or higher than 24 l/mm. The properties referred to in the description and in the examples are measured according to the following methods. The examples are given to illustrate and not to limit the present invention. <u>Molar ratio of feed gases:</u> Determined by gas-chromatography

Comonomer (C2) content: By IR spectroscopy
Melt flow rate (MFR): Determined according to ISO 1133 (230°C, 2.16 Kg)
Intrinsic viscosity: Determined in tetrahydronaphthalene at 135°C
Flexural modulus: Determined according to ISO 178
Melting temperature, melting enthalpy and crystallization temperature: Determined by DSC with a temperature variation of 20°C per minute
Polydispersity Index (P.I.)

Determined at a temperature of 200°C by using a parallel plates rheometer model RMS-800 marketed by RHEOMETRICS (USA), operating at an oscillation frequency which increases from 0.1 rad/sec to 100 rad/second. From the modulus separation value, one can derive the P.I. by way of the equation:

$$P.I.= 54.6*(\text{modulus separation})^{-1.76}$$

in which the modulus separation is defined as:

$$\text{modulus separation} = \text{frequency at G'=500Pa} / \text{frequency at G''=500Pa}$$

wherein G' is storage modulus and G" is the loss modulus.

Xylene-soluble fraction

2.5 g of polymer and 250 mL of o-xylene are introduced in a glass flask equipped with a refrigerator and a magnetical stirrer. The temperature is raised in 30 minutes up to the boiling point of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and 100 ml of the filtered liquid is poured in a previously weighed aluminum container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

Titre of filaments

From a 10 cm long roving, 50 fibers are randomly chosen and weighed. The total weight of the 50 fibers, expressed in mg, is multiplied by 2, thereby obtaining the titre in dtex.

Tenacity and Elongation at break of filaments

From a 500m-roving a 100mm-long segment is cut and single fibers randomly chosen. Each single fiber is fixed to the clamps of an Instron Dynamometer (model 1122) and tensioned to break with a traction speed of 20 mm/min for elongations lower than 100% and 50 mm/min for elongations greater than 100%, the initial distance between the clamps being of 20 mm. The ultimate strength (load at break) and the elongation at break are determined both in machine (MD) and in transverse (TD) directions. The tenacity is calculated by way of the following equation:

$$\text{Tenacity} = \text{Ultimate strength (cN)} \times 10/\text{Titre (dtex)}.$$

Softness on fibers

Through this method the Softness Index of fibers is determined. The Softness Index is calculated as weight (l/g) of a bundle of fibers, whose length is determined in standard conditions. A fiber bundle of about 4000 dtex in linear density and 0.6 m in length is prepared. The end of the bundle is fixed on the clamps of the twist measuring device (Torcimetro Negri e Bossi SpA) and a 120 leftward twist runs applied. The twisted bundle is taken off from the device carefully avoiding any un-twisting. The two ends of the twisted bundle are joint and the halves are wound around each other until the bundle looks like a rope. 3 specimens are prepared for each test. The bundle is bent in two and the ends are fixed between the rolls of a Clark softness tester keeping a distance of 1 cm between the two halves. The device is rotated rightwards and stopped when the bundle reverses its bending direction, taking note of the rotation angle (a). Then, the bundle is rotated leftward and till it reverses its bending side, taking note of the rotation angle (b). The height of the bundle above the two rolls is subsequently adjusted to have the sum (a)+(b)=90° and said height (h) is measured with a proper device having sensitivity of 1mm. Each of the two angles, a and b, should not exceed the limits of 45°+-15°. The bundle is removed from the device and cut to a height (h) corresponding to that previously measured. The cut bundle is weighted by an analytical balance with a precision of 0.1 mg. The Softness index is calculated from the formula:

$$S.I. = (1/w) * 100$$

where w is the weight, in grams, of the cut bundle. The given result is the average over 3 specimens.

Determination of the Bending Softness Index on non-woven fabrics

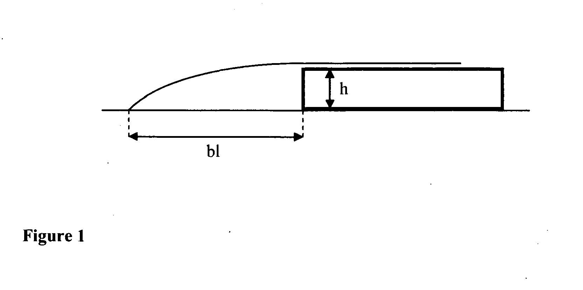

Test specimens of 200 mm length and 50 mm width are prepared folding once a single-layer non-woven fabric and are placed on a smooth box having the following dimensions: height=35mm; length=300mm; width=100mm. The specimen is slowly pushed along the surface until it bends, thus reaching the underlying surface (see Figure 1). The distance between the box face and the touch down point is the bending length (bl), expressed in mm. The final value of the bending length is the average over 10 samples. The B.S.I. is calculated from the equation:

$$B.S.I. = (1/bl) * 1000$$

where bl is the bending length in mm of the nonwoven specimen.

Softness by panel test

20 persons randomly chosen are asked to touch and evaluate the softness of the test specimens by comparison with a reference sample (propylene homopolymer commonly used for fibers). The specimens were ranked as follows: 1= lower than reference; 2= equal to reference; 3= better than reference; 4= much better then reference; 5= extremely good. The figures on the tables corresponds to the average ranking.

Preparation of the propylene polymer (A)

The solid catalyst used to prepare the precursor propylene copolymer or precursor propylene polymer composition (A1) was prepared according to the Example 5, lines 48-55 of the European Patent EP728769, with the only difference that the addition of 200 ml of $TiCl_4$ and the subsequent washing with n-heptane was repeated four times. Triethylaluminium (TEAL) was used as co-catalyst and dicyclopentyldimethoxysilane as external donor. The propylene polymer (A1) was prepared in one single polymerization step by feeing the monomers and the catalyst system to a gas-phase polymerization reactor comprising two interconnected polymerization zones, a riser and a downcomer, as described in the International patent application WO00/0292 The indicated amount of comonomer was fed exclusively into the first polymerization zone (raiser); the gas composition into the two polymerization zones was differentiated by means of a barrier feed. The molecular weight regulator, i.e. hydrogen, was fed only to the riser. The obtained polymer particles were subjected to a steam treatment to remove the unreacted monomers and dried. The propylene polymer composition (A) was prepared extruding the propylene polymer (A1) in the presence of 0.030% by weight of calcium stearate, 0.19 wt% of Irganox® B501W (traded by Ciba Specialty Chemicals) and 0.073% by weight of Luperox® 101, a peroxide traded by Akzo. The polymerization conditions and the properties of the propylene polymer before and after the chemical degradation with the peroxide are reported in Table 1.

Table 1

| Polymerization conditions | | |
|---|---|---|
| TEAL/external donor | wt/wt | 4 |
| Temperature | °C | 72 |
| Pressure, bar | MPa | 2.4 |

(continued)

| Polymerization conditions | | |
|---|---|---|
| $C_2^-/(C_2^-+C_3^-)$ | mol/mol | 0.048 |
| Properties of the precursor polymer composition (A1) | | |
| MFR | g/10 min | 1.9 |
| Ethylene content | wt% | 4.7 |
| Xylene-soluble fraction | wt% | 11.1 |
| Properties of the polymer composition (A) after chemical degradation | | |
| MFR | g/10 min | 26 |
| Polydispersity Index | | 2.65 |
| Ethylene content | wt% | 4.7 |
| Xylene-soluble fraction | wt% | 11.1 |
| Melting temperature | °C | 146 |
| Melting Enthalpy | J/g | 64 |
| Crystallization temperature | °C | 102 |

**Examples 1-3 and Comparative Examples 1c-2c**

Blends at different percentages of the above-described propylene polymer (A) with a component (B) having the composition indicated below were prepared via dry-blend in a conventional apparatus and subsequently spun in a Leonard 25 spinning pilot line with screw L/D ratio of 25, screw diameter of 25 mm and compression ratio of 1:3. The line is marketed by Costruzioni Meccaniche Leonard-Sumirago (VA). The blend compositions, operative spinning conditions and properties of the obtained filaments are reported in Table 2.

Component (B) is a propylene polymer composition comprising (percentages based on the sole component (B)):

(a) 33 wt% of a propylene/ethylene copolymer containing 4.3 wt% of units derived from ethylene (with respect to fraction (a)), having xylene-soluble fraction of 9 wt%;
(b) 6 wt% of ethylene/propylene copolymer containing 94 wt% of units derived from ethylene (with respect to fraction (b)) and being totally insoluble in xylene; and
(c) 61 wt% of propylene/propylene copolymer containing 30 wt% of units derived from ethylene (with respect to fraction (c)) and being totally soluble in xylene.

Component (B) has a MFR of 27 g/10min.

Table 2

| | | Comp. Ex.1c | Ex.1 | Ex.2 | Ex.3 | Comp. Ex.2c |
|---|---|---|---|---|---|---|
| Blend composition | | | | | | |
| (A) | wt% | 100 | 90 | 80 | 70 | 40 |
| (B) | wt% | 0 | 10 | 20 | 30 | 60 |
| Operative conditions | | | | | | |
| Hole diameter | mm | 0,6 | 0.6 | 37 | 250 | 2700 |
| Output per hole | g/min | | | | | |
| Hole number in the die | / | | | | | |
| Die temperature | °C | | | | | |
| Melt temperature | °C | | | | | |

(continued)

| Operative conditions | | | | | | |
|---|---|---|---|---|---|---|
| Take up speed | m/min | | | | | |
| Maximum Spinning Speed | m/min | 4500 | 4500 | 4500 | 4500 | 4200 |
| Properties of the filaments | | | | | | |
| Titre | dtex | 2.3 | 2.3 | 2.4 | 2.35 | 2.25 |
| Tenacity | cN/tex | 26 | 24 | 24 | 24 | 22 |
| Elongation at break | % | 190 | 180 | 170 | 170 | 120 |
| Softness Index | 1/g | 949 | 1053 | 1082 | 1124 | 1110 |

The maximum spinning speed gives indication of the spinnability of the propylene polymer composition of the invention. The value corresponds to the highest spinning rate that can be maintained for 30 minutes with no filament break. The propylene polymer compositions of the invention have extremely good spinnability, at least comparable to the spinnability of the propylene polymer (A) (see Comparative example 1), and can be manufactured into filaments having superior softness while retaining high tenacity and high elongation at break. Increasing the amount of the component (B) above the claimed ranges brings about no significant improvements into spinnability and/or of softness of the filaments but conversely badly affects the mechanical properties of the filaments.

Comparative Examples 3c and 4c

Blends at different percentages of a propylene homopolymer having MFR of 25 g/10 min, traded under the name of Moplen HP561R by Basell and the component (B) used in example 1 were prepared via dry-blend in the same apparatus described above and spun into filaments under the condition reported on Table 2. The blend compositions, the maximum spinning speeds and properties of the filaments are reported in Table 3.

Table 3

| Comparative Example | | 3c | 4c |
|---|---|---|---|
| Blend Composition | | | |
| HP561R | wt% | 90 | 80 |
| (B) | wt% | 10 | 20 |
| Maximum Spinning Speed, m/min | | 4200 | 3900 |
| Properties of the filament | | | |
| Titre | dtex | 2.35 | 2.50 |
| Tenacity | cN/tex | 23 | 20 |
| Elongation at break | % | 200 | 180 |
| Softness Index | 1/g | 968 | 1034 |

**Examples 4-5 and Comparative Example 5c**

The propylene polymer composition of Example 1, 3 and of Comparative Example 1c were processed in a spunbond line to produce the non-woven fabrics of Example 4, 5 and Comparative Example 6c respectively. The operative conditions of the spunbond line and the properties of the non-woven fabrics are reported on Table 4.

Table 4

| | | Comp. Ex.5c | 4 | 5 |
|---|---|---|---|---|
| Operative conditions | | | | |
| Temperature of the polymer melted in the filter | °C | 247 | 247 | 247 |

(continued)

| | | Comp. Ex.5c | 4 | 5 |
|---|---|---|---|---|
| *Operative conditions* | | | | |
| Temperature of the smooth calender | °C | 131 | 130 | 130 |
| Temperature of the embossed calender | °C | 131 | 130 | 130 |
| *Properties of non-woven fabrics* | | | | |
| Fabric weight | g/m2 | 17 | 17 | 17 |
| MD tenacity | N | 31 | 28 | 26 |
| CD tenacity | N | 20 | 18 | 16 |
| MD elongation at break | % | 71 | 68 | 54 |
| CD elongation at break | % | 87 | 80 | 74 |
| Bending length | mm | 43 | 42 | 39 |
| B.S.I. | 1/mm | 23 | 24 | 26 |
| Softness by panel test | | 2 | 3 | 5 |

The non-woven fabrics according to the present invention show higher softness and equivalent fabric tenacity if compared to non-woven fabrics obtained from the propylene polymer composition (A).

**Examples 6 and 7**

Sheath-core filaments were prepared using Moplen HP561R by Basell as core layer and a propylene polymer composition according to the invention as skin layer. The propylene polymer composition of the invention comprised blends at different percentages of the above-described propylene polymers (A) and (B) and were prepared as described in Example 1. The sheath-core filament contained 70 wt% of core layer and 30 wt% of sheath layer and were produced on a conventional apparatus equipped with die suitable for producing filaments having sheath-core structure. The sheath-core filaments were processed in a conventional spun-bond line to produce the non-woven fabrics. The skin layer composition, the operative conditions of the spun-bond line and the properties of the non-woven fabrics are reported on Table 5.

Table 5

| Example I | | 6 | 7 |
|---|---|---|---|
| *Propylene polymer composition* | | | |
| (A) | wt% | 70 | 85 |
| (B) | wt% | 30 | 15 |
| *Operative conditions* | | | |
| Temperature of molten polymer | °C | 242 (core) 232 (sheet) | 242 (core) 232 (sheet) |
| Temperature of smooth calender | °C | 124 | 127 |
| Temperature of embossed calender | °C | 120 | 127 |
| *Properties of non-woven fabrics* | | | |
| weight | g/m$^2$ | 17 | 17 |
| MD tenacity | N | 30 | 35 |
| CD tenacity | N | 18 | 22 |
| MD elongation at break | % | 100 | 97 |

(continued)

| Properties of non-woven fabrics | | | |
|---|---|---|---|
| TD elongation at break | % | 110 | 116 |
| Bending length | mm | 52 | 54 |
| B.S.I. | l/mm | 19 | 18 |
| Softness panel test | | 2 | 2 |

## Claims

1. Propylene polymer composition comprising (based on the sum of A+B):

   (A) 55-95 wt% of a propylene copolymer or a propylene copolymer composition containing from 0.8 to 10wt% (based on the propylene polymer (A)), of alpha-olefin units having from 2 to 10 carbon atoms other than propylene, said propylene copolymer or propylene copolymer composition having MFR(A) ranging from 10 to 60 g/10min, melting temperature equal to or higher than 145°C, xylene soluble fraction at 25°C lower than 15 wt%, Polydispersity Index (PI) value ranging from 2.5 to 6; and
   (B) 5-55 wt% of a propylene polymer composition comprising (based on the component (B)):

   (a) 5-50 wt% of a propylene homopolymer having a xylene soluble fraction at 25°C lower than 20 wt% or of a copolymer of propylene with at least one alpha-olefin having from 2 to 10 carbon atoms other than propylene; said copolymer containing more than 85% of propylene units and having a xylene soluble fraction at 25°C lower than 20 wt%;
   (b) 0-20 wt% of a copolymer of ethylene with at least one alpha-olefin having from 3 to 10 carbon atoms, said copolymer being at least partially insoluble in xylene at 25°C; and
   (c) 40-95 wt% of a copolymer of propylene with at least one alpha-olefin having from 2 to 10 carbon atoms other than propylene, said copolymer containing from 20 to 38 wt% of alpha-olefin units and having solubility in xylene at 25°C higher than 50 wt% and an intrinsic viscosity ranging from 1.5 to 4.0 dl/g.

2. The propylene polymer composition of claim 1, wherein the component (A) is a propylene polymer composition comprising:

   (I) 20-80 wt% of a propylene homopolymer or propylene copolymer with at least one alpha-olefin having from 2 to 10 carbon atoms other than propylene, said copolymer containing up to 1.5 wt% of alpha-olefin units and
   (II) 20-80 wt% of a propylene copolymer with at least one alpha-olefin having from 2 to 10 carbon atoms other than propylene, said copolymer containing up to 10 wt% of alpha-olefin units,

   provided that the total alpha-olefin content of the propylene polymer composition (A) is up to 10 wt%.

3. Fiber or filament comprising a propylene polymer composition according to claim 1 or 2.

4. Spun-bonded nonwoven fabric comprising a propylene polymer composition according to claim 1 or 2.

5. Spun-bonded nonwoven fabric according to claim 4 having Bending Softness Index equal to or higher than 24 l/mm.

6. Fiber or filament having sheath-core structure, wherein the sheath layer comprises the propylene polymer composition of claim 1 or 2 and core layer comprises a propylene homopolymer having xylene-soluble fraction at 25°C lower than 5.0 wt% and flexural modulus higher than 1100 MPa.

7. Process for the preparation of fibers or filaments **characterized in that** it comprises the step of melt-spinning a propylene polymer composition according to claim 1 or 2.

8. Process for the preparation of a spun-bonded nonwoven fabric **characterized in that** it comprises the step of spun-bonding fibers or filaments comprising a propylene polymer composition according to claim 1 or 2.

**Patentansprüche**

1. Propylenpolymerzusammensetzung, umfassend (bezogen auf die Summe von A+B):

   (A) 55 bis 95 Gew.-% eines Propylencopolymers oder einer Propylencopolymerzusammensetzung mit von 0,8 bis 10 Gew.-% (bezogen auf das Propylenpolymer (A)) $\alpha$-Olefineinheiten mit von 2 bis 10 Kohlenstoffatomen außer Propylen, wobei das Propylencopolymer oder die Propylencopolymerzusammensetzung eine MFR (A) im Bereich von 10 bis 60 g/10min, eine Schmelztemperatur gleich oder höher als 145 °C, eine bei 25 °C in Xylen lösliche Fraktion niedriger als 15 Gew.-%, einen Polydispersitätsindex-Wert (PI-Wert) im Bereich von 2,5 bis 6 aufweist; und
   (B) 5 bis 55 Gew.-% einer Propylenpolymerzusammensetzung, umfassend (bezogen auf die Komponente (B)):

   (a) 5 bis 50 Gew.-% eines Propylenhomopolymers mit einer bei 25 °C in Xylen löslichen Fraktion niedriger als 20 Gew.-% oder eines Propylencopolymers mit mindestens einem $\alpha$-Olefin mit von 2 bis 10 Kohlenstoffatomen außer Propylen; wobei das Copolymer mehr als 85 % Propyleneinheiten enthält und eine bei 25 °C in Xylen lösliche Fraktion niedriger als 20 Gew.-% aufweist;
   (b) 0 bis 20 Gew.-% eines Ethylencopolymers mit mindestens einem $\alpha$-Olefin mit von 3 bis 10 Kohlenstoffatomen, wobei das Copolymer mindestens teilweise in Xylen bei 25 °C unlöslich ist; und
   (c) 40 bis 95 Gew.-% eines Propylencopolymers mit mindestens einem $\alpha$-Olefin mit von 2 bis 10 Kohlenstoffatomen außer Propylen, wobei das Copolymer weniger als 20 bis 38 Gew.-% $\alpha$-Olefineinheiten enthält und bei 25 °C in Xylen eine Löslichkeit höher als 50 Gew.-% und eine intrinsische Viskosität im Bereich von 1,5 bis 4,0 dl/g aufweist.

2. Propylenpolymerzusammensetzung nach Anspruch 1, worin die Komponente (A) eine Propylenpolymerzusammensetzung ist, umfassend:

   (I) 20 bis 80 Gew.-% eines Propylenhomopolymers oder Propylencopolymers mit mindestens einem $\alpha$-Olefin mit von 2 bis 10 Kohlenstoffatomen außer Propylen, wobei das Copolymer bis zu 1,5 Gew.-% $\alpha$-Olefineinheiten enthält und
   (II) 20 bis 80 Gew.-% eines Propylencopolymers mit mindestens einem $\alpha$-Olefin mit von 2 bis 10 Kohlenstoffatomen außer Propylen, wobei das Copolymer bis zu 10 Gew.-% $\alpha$-Olefineinheiten enthält,

   mit der Maßgabe, dass der Gesamtgehalt des $\alpha$-Olefins der Propylenpolymerzusammensetzung (A) bis zu 10 Gew.-% beträgt.

3. Faser oder Filament, umfassend eine Propylenpolymerzusammensetzung nach Anspruch 1 oder 2.

4. Spinnvlies, umfassend eine Propylenpolymerzusammensetzung nach Anspruch 1 oder 2.

5. Spinnvlies nach Anspruch 4 mit einem Biegeweichheitsindex gleich oder höher als 24 l/mm.

6. Faser oder Filament mit einer Mantel/Kern-Struktur, worin die Mantelschicht die Propylenpolymerzusammensetzung nach Anspruch 1 oder 2 umfasst und die Kernschicht aus einem Propylenhomopolymer mit einer bei 25 °C in Xylen löslichen Fraktion niedriger als 5,0 Gew.-% und einen Biegemodul höher als 1100 MPa besteht.

7. Verfahren zur Herstellung von Fasern oder Filamenten, **dadurch gekennzeichnet, dass** es den Schritt zum Schmelzspinnen einer Propylenpolymerzusammensetzung nach Anspruch 1 oder 2 umfasst.

8. Verfahren zur Herstellung eines Spinnvlieses, **dadurch gekennzeichnet, dass** es den Schritt zum Spunbonding von Fasern oder Filamenten beinhaltet, umfassend eine Propylenpolymerzusammensetzung nach Anspruch 1 oder 2.

**Revendications**

1. Composition de polymère de propylène, comprenant (sur base de la somme A+B):

   (A) 55-95% en poids d'un copolymère de propylène ou d'une composition de copolymère de propylène contenant 0,8 à 10% en poids (sur base du polymère de propylène (A)) d'unités d'alpha-oléfines comprenant 2 à 10 atomes de carbone autres que le propylène, ledit copolymère de propylène ou ladite composition de copolymère de propylène présentant un MFR(A) dans la plage de 10 à 60 g/10min, une température de fusion égale ou supérieure à 145°C, une fraction soluble dans le xylène à 25°C inférieure à 15% en poids, une valeur de l'indice de polydispersité (IP) dans la plage de 2,5 à 6 ; et
(B) 5-55 % en poids d'une composition de polymère de propylène comprenant (sur base du composant (B)) :

(a) 5-50 % en poids d'un homopolymère de propylène présentant une fraction soluble dans le xylène à 25°C inférieure à 20 % en poids ou d'un copolymère de propylène avec au moins une alpha-oléfine comprenant 2 à 10 atomes de carbone autre que le propylène; ledit copolymère contenant plus de 85% d'unités de propylène et présentant une fraction soluble dans le xylène à 25°C inférieure à 20 % en poids ;
(b) 0-20% en poids d'un copolymère d'éthylène avec au moins une alpha-oléfine comprenant 3 à 10 atomes de carbone, ledit copolymère étant au moins partiellement insoluble dans le xylène à 25°C ; et
(c) 40-95 % en poids d'un copolymère de propylène avec au moins une alpha-oléfine comprenant 2 à 10 atomes de carbone autre que le propylène, ledit copolymère contenant 20 à 38% en poids d'unités d'alpha-oléfines et présentant une solubilité dans le xylène à 25°C supérieure à 50% en poids et une viscosité intrinsèque dans la plage de 1,5 à 4,0 dl/g.

2. Composition de polymère de propylène selon la revendication 1, où le composant (A) est une composition de polymère de propylène comprenant :

(I) 20-80 % en poids d'un homopolymère de propylène ou d'un copolymère de propylène avec au moins une alpha-oléfine comprenant 2 à 10 atomes de carbone autre que le propylène; ledit copolymère contenant jusqu'à 1,5% en poids d'unités d'alpha-oléfines et
(II) 20-80 % en poids d'un copolymère de propylène avec au moins une alpha-oléfine comprenant 2 à 10 atomes de carbone autre que le propylène, ledit copolymère contenant jusqu'à 10% en poids d'unités d'alpha-oléfines,

à condition que la teneur totale en alpha-oléfines de la composition de polymère de propylène (A) soit de jusqu'à 10 % en poids.

3. Fibre ou filament comprenant une composition de polymère de propylène selon la revendication 1 ou 2.

4. Tissu non tissé filé-lié comprenant une composition de polymère de propylène selon la revendication 1 ou 2.

5. Tissu non tissé filé-lié selon la revendication 4, présentant un indice de souplesse à la flexion identique ou supérieur à 24 l/mm.

6. Fibre ou filament présentant une structure gaine-noyau, où la couche de gaine comprend la composition de polymère de propylène selon la revendication 1 ou 2 et la couche de noyau comprend un homopolymère de propylène présentant une fraction soluble dans le xylène à 25°C inférieure à 5,0% en poids et un module de flexion supérieur à 11 000 MPa.

7. Procédé pour la préparation de fibres ou de filaments, **caractérisé en ce qu'**il comprend l'étape de filage en masse fondue d'une composition de polymère de propylène selon la revendication 1 ou 2.

8. Procédé pour la préparation d'un tissu non tissé filé-lié, **caractérisé en ce qu'**il comprend l'étape de filage-liaison de fibres ou de filaments comprenant une composition de polymère de propylène selon la revendication 1 ou 2.

**Figure 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004029342 A
- EP 663965 A
- EP 45977 A
- EP 361494 A
- EP 728769 A
- EP 1272533 A
- WO 0063261 A
- US 4399054 A

- US 4469648 A
- EP 395083 A
- WO 9844009 A
- EP 782587 A
- WO 0002929 A
- EP 472946 A
- WO 03011962 A
- WO 000292 A